# FASCICULE DE BREVET EUROPEEN

(11) **EP 3 695 480 B1**
(45) Date de publication et mention de la délivrance du brevet: **07.08.2024**
(21) Numéro de dépôt: 18808417.2
(22) Date de dépôt: 12.10.2018
(51) Int. Cl.: H02J 3/38, H02J 3/00

(54) **SYSTÈME DE CONTRÔLE ET DE PILOTAGE D'ÉQUIPEMENTS ÉNERGÉTIQUES DISTRIBUÉS**
SYSTEM ZUR STEUERUNG UND ÜBERWACHUNG VON VERTEILTEN LEISTUNGSGERÄTEN
SYSTEM FOR CONTROLLING AND MONITORING DISTRIBUTED POWER EQUIPMENT

(30) Priorité: 12.10.2017 FR 1759585
(43) Date de publication de la demande: 19.08.2020
(73) Titulaire: Evolution Energie, 75012 Paris (FR)
(72) Inventeur: GUIZOUARN, Erwin, 75005 PARIS (FR)
(74) Mandataire: IP Trust
(86) Numéro de dépôt international: PCT/FR2018/052539
(87) Numéro de publication internationale: WO 2019/073183

(56) Documents cités:
- WO-A1-2017/065941
- US-A1- 2013 066 482
- US-A1- 2015 280 436

## Description

### Domaine de l'invention

La présente invention concerne le domaine des réseaux énergétiques intelligents (« smartgrid » en anglais), dans le cadre de l'habitat résidentiel, de bâtiments tertiaires ou d'organisations (villes, entreprises commerciales ou industrielles), de grandes infrastructures (réseaux de transport ou de distribution d'électricité ou de gaz naturel), basés sur une production décentralisée issue de sources de production conventionnelles couplées ou non à une ou plusieurs énergies renouvelables et/ou des capacités de stockage et en particulier la gestion de l'énergie dans les réseaux d'énergie, notamment les réseaux électriques et les réseaux de gaz naturel.

Un réseau énergétique intelligent (« smartgrid » en anglais) est généralement constitué :
- d'un point de livraison, faisant le lien avec un réseau principal (de distribution ou transport) et un réseau secondaire de distribution ou transport. Des équipements de transformation (tels que conversion de tension, détente de gaz naturel, ...) d'énergie peuvent éventuellement y être installés. Ce point de livraison peut, dans le cas extrême d'un réseau intelligent fermé, ne pas exister. Différents fournisseurs d'énergie peuvent intervenir sur ce réseau ;
- d'un ou plusieurs générateurs constitués par des installations de production d'énergie de sources renouvelables intermittentes (le plus souvent dépendantes du vent ou du soleil) ou variables (biomasse, géothermie...) mais également d'installations de production conventionnelles (centrales thermiques, turbines, co-génération ou tri-génération, groupes électrogènes, micro-génération, ...), éventuellement regroupées en usine de production virtuelle (« virtual power plant » en anglais) ;

- de dispositifs de stockage ou de conversion d'énergie (piles à combustible, batteries, super condensateurs, volants d'inertie, stockage d'air comprimé, stockage thermique, pompage hydraulique ...) permettant l'injection ou le soutirage de l'énergie utile à l'équilibrage des réseaux (principal et secondaire) ;
- de charges fixes : les équipements de chacun des sites (bâtiment d'habitation, bâtiment tertiaire, site industriel, plusieurs bâtiments regroupés en ilot...), ayant chacun un ou plusieurs usages énergétiques (chauffage, climatisation, ventilation, éclairage, prises électriques, eau chaude sanitaire, procédé industriel, ...) et une performance énergétique dépendante de différents critères (type et vétusté des équipements, usage par les occupants, maintenance, ...) ;
- de charges mobiles : ces charges sont liées au transport des personnes ou des biens, par des véhicules, notamment électriques ou hybrides ;
- d'un opérateur permettant le lien administratif (la contractualisation et la facturation des sites, gestion des fournisseurs d'énergie) et technique (raccordement, demandes de délestage, ...) avec les gestionnaires du réseau énergétique principal ainsi que la coordination et l'équilibrage du réseau secondaire. L'opérateur peut être constitué de personnes physiques et/ou de personnes morales et/ou de systèmes d'information.

Les réseaux intelligents sont déployés dans différents contextes :
- les organisations commerciales, tertiaires ou industrielles : ces entreprises, administrations ou industriels, de statut public ou privé, ont des besoins en énergie qui dépendent de leurs activités et comportent une multiplicité de points de consommation et/ou de production. Il s'agit d'y assurer le meilleur équilibre entre les coûts, la sureté de fonctionnement et l'intégration de sources d'énergie multiples. Certains de ces acteurs peuvent en outre participer à des programmes d'ajustement électrique (« demand-response » en anglais) ou d'équilibrage (« balancing » en anglais) proposés par le gestionnaire de réseau ;
- l'habitat résidentiel et les éco-quartiers : sous la responsabilité de la municipalité, un éco-quartier vise à développer un habitat résidentiel durable et peut mettre en place des micro-réseaux ou nano-réseaux (« microgrid » et « nanogrid » en anglais). Des règles spécifiques dans le traitement des données personnelles (profils de consommation et d'usages) peuvent s'appliquer ;
- les campus universitaires : l'enjeu est le plus souvent de disposer de terrains d'expérimentation pour des recherches académiques et des programmes de formation ou de sensibilisation à destination des étudiants et des personnels ;
- les zones isolées car faiblement ou non raccordées aux réseaux électriques (notamment les zones insulaires) ou temporairement coupées du réseau du fait d'un délestage ou d'un incident (intempéries, tremblement de terre, attentat ...) : l'enjeu est de permettre le déploiement d'installations complémentaires au réseau principal, qu'elles soient pérennes ou de secours ;
- les « base vie » (camp militaire, station d'exploration,...) ou infrastructures critiques (hôpital, services de secours, centres et réseaux de données, équipements aéroportuaires, réseaux de transport, industries d'intérêt national ...) : avec ses propres moyens de production et de stockage et ses propres infrastructures de distribution, le réseau intelligent garantit une autonomie énergétique fournissant de l'électricité pendant les périodes de coupures de courant sur le réseau, atout essentiel pour ces infrastructures critiques qui ne peuvent pas laisser des pannes d'énergie les empêcher de s'acquitter de leurs missions.

L'invention concerne plus particulièrement le pilotage des flux énergétiques distribués sur le réseau intelligent et la commande des charges, stockages et productions associés.

Pour optimiser le fonctionnement du réseau intelligent, l'opérateur doit disposer des moyens de surveillance sur une partie significative des points de production et de consommation situés entre le point de livraison et les équipements du consommateur final.

Un compteur d'énergie principal ou une centrale de mesure permet l'acquisition et le traitement des principaux paramètres énergétiques au niveau du point d'entrée dans le réseau intelligent, notamment dans le cas de l'électricité de la puissance active, la puissance réactive, la fréquence, la tension, le facteur de puissance (cos phi), et dans certains cas d'autres paramètres liés à la qualité du courant (les harmoniques et le « phase lock loop », ...) ou au contrôle des équipements (convertisseurs DC/AC, AC/DC, ...), ou dans le cas du gaz les volumes injectés et soutirés, ainsi que d'autres paramètres relatifs à la qualité du gaz (pouvoir calorifique, composition chimique...). En outre des informations relatives au contexte administratif (facturation, paramétrage, ...) ou au traitement des données mesurées (période d'échantillonnage, facteurs de conversion, température de référence pour le gaz, ...) doivent être prises en compte.

Au niveau du réseau intelligent, des compteurs permettent a minima de mesurer les productions locales et les consommations à l'entrée de chacun des sites. Optionnellement, des mesures à l'intérieur des sites peuvent être réalisées, avec du comptage effectué pour des raisons de facturation (compteur tarifaire) ou d'optimisation de la performance énergétique (sous-comptage par usage énergétique), ou des mesures directes ou indirectes des facteurs influençant le confort des occupants (par exemple la température intérieure, l'humidité relative, la luminosité, ...) ou le fonctionnement des équipements (par exemple le nombre de personnes présentes, le nombre de pièces produites par l'usine,...). Des données simulées (par exemple des simulations thermodynamiques des bâtiments, des simulations de réseau électrique de type « optimal power flow », etc.) ou des données extérieures peuvent aussi fournir des informations utiles, notamment des données statistiques (degrés jours, historiques des conditions climatiques, prix côtés sur les marchés de l'énergie, statistiques sur le fonctionnement du réseau principal ...) ou météorologiques (température extérieure, humidité, pression, radiation solaire, direction et force du vent et des nuages, ...) issues de fournisseurs de données externes (par exemple, agences publiques, société de services, amateurs disposant de stations météorologiques, capteurs déployés sur le site ...).

L'opérateur assure la collecte et le traitement de ces données et effectue les calculs mathématiques nécessaires à la prédiction et à l'optimisation des flux énergétiques sur le réseau intelligent, en prenant en compte les différentes contraintes physiques et administratives de fonctionnement. L'objectif est de fournir des informations de pilotage et de contrôle aux automates associés à tout ou partie des équipements, éventuellement complétés par des systèmes d'alarme ou une surveillance humaine pour les équipements critiques. Ces automates permettent ainsi de contrôler un volume de production d'énergie (par exemple le débit de gaz en entrée d'une turbine), les cycles de charge et décharge d'un stockage ou le fonctionnement des équipements (par exemple la gestion des volets électriques, l'usage d'un thermostat pour contrôler la température intérieure, ...) .

### Etat de la technique

On connaît dans l'état de la technique le brevet américain WO2017065941 concernant un procédé et des systèmes permettant l'agrégation et la commande de réseaux d'énergie incluant des ressources d'énergie réparties. Le procédé et le système selon la présente invention utilisent l'intelligence disponible dans le réseau de données d'informations, et évitent une dépendance envers le réseau de données opérationnel de l'opérateur du système/du service public.

On connaît aussi le brevet américain US2013066482 décrivant une architecture de réponse à la demande (DR) exécute des processus destinés à être utilisés dans un réseau électrique. L'architecture de reprise après sinistre applique une méthode pour sélectionner un processus à utiliser pour la planification des périphériques. Le procédé consiste à recevoir, par un contrôleur de réponse à la demande, une entrée spécifique à la réponse à la demande. Le procédé consiste à déterminer un processus à utiliser pour planifier des modèles de temps d'exécution du dispositif, en fonction de l'entrée reçue. Le procédé comprend en outre l'exécution du processus déterminé. On connaît aussi le brevet américain US8078330 décrivant un système de gestion automatique de l'énergie dans un système complexe à bâtiments multiples. La surveillance et la reconnaissance informatisées d'événements d'énergie indésirables (tels que l'approche d'un nouveau pic d'énergie) déterminent la gestion de l'énergie. Cette solution de l'art antérieur prévoit l'interrogation automatique immédiate de consommateurs d'énergie dans un système de bâtiments en vue d'établir les possibilités de réduction de consommation d'énergie. Les consommateurs d'énergie peuvent répondre à cette interrogation immédiate automatique au moyen d'une technologie d'intelligence artificielle et/ou de réseau neuronal fournie aux consommateurs d'énergie ou programmée auprès de ceux-ci, les consommateurs d'énergie interrogés pouvant répondre en temps réel. Les réponses informatisées en temps réel comprenant les possibilités de réduction de consommation d'énergie peuvent être reçues automatiquement par une installation de traitement de données, et traitées en temps réel. Avantageusement, les réponses en provenance des consommateurs d'énergie interrogés comprenant les possibilités de réduction de consommation d'énergie peuvent être automatiquement traitées dans un programme de réduction de consommation par roulement pouvant être mis en oeuvre au moyen d'un système de commande informatisé. Cela permet de minimiser l'impact sur les habitants et de réduire avantageusement la consommation et le coût de l'énergie de manière intelligente et en temps réel.

On connaît aussi le brevet américain US2015280436 décrivant une procédé et un système de distribution et / ou de contrôle d'un flux d'énergie vers un groupe de plusieurs nœuds d'un réseau électrique, chaque noeud ayant un état associé, prenant en compte les contraintes relatives à l'énergie livrée aux noeuds et les contraintes relatives au réseau électrique comprenant : l'attribution d'un agent local à chaque noeud du groupe d'une pluralité de noeuds, l'agent local recevant une priorité pour l'énergie à délivrer; affecter un agent concentrateur régional au réseau régional, comprenant au moins une partie du groupe, dans lequel un total du au moins un réseau régional forme le réseau d'électricité; recevoir, par le ou les agents concentrateurs régionaux, la priorité pour la fourniture d'énergie entre les noeuds et déterminer une priorité globale pour la distribution d'énergie vers le ou les réseaux régionaux, en fonction des limites de tension.

### Inconvénients de l'art antérieur

Les solutions de l'art antérieur présentent plusieurs inconvénients.

En premier lieu, la planification repose uniquement sur un traitement centralisé. Les traitements d'optimisation sont effectués par le réseau principal et/ou l'opérateur en prenant en compte généralement les informations relatives à un site tels que définis dans un contrat ou par un système réglementaire (en particulier les règles administratives et techniques associées aux mécanismes d'ajustement ou aux régimes d'équilibrage, définies par le gestionnaire du réseau principal) et non pas au fonctionnement réel des équipements de chacun des sites. Les équipements dépendant de cette optimisation centralisée ne peuvent pas opérer de manière autonome. Les règles utilisées pour la définition de la planification optimale sont appliquées de manière globale pour l'ensemble du réseau secondaire et ne permettent pas de traiter également les préférences et contraintes locales dans la recherche d'une solution optimale. Cela limite aussi la diffusion des réseaux intelligents à des sites disposant des ressources et compétences pour mettre en place leur propre optimisation énergétique en fonction des caractéristiques spécifiques de leurs équipements, de l'activité du site et des règles s'appliquant à l'ensemble du réseau intelligent.

En deuxième lieu, les solutions actuelles posent des problèmes de montée en charge. Le traitement global de l'optimisation nécessite que chaque site transmette l'intégralité des informations à l'opérateur, ce qui engendre des problématiques de sécurité (en particulier de confidentialité), de performance (en raison de la volumétrie des données à transmettre par les sites et à traiter par le seul opérateur) et de garantie de fonctionnement (l'opérateur étant chargé de l'ensemble des tâches de planification et de contrôle).

En troisième lieu, le pilotage n'est pas adapté aux capacités réelles de commande des équipements. Le traitement global ne permet pas de personnaliser les paramètres de fonctionnement et de priorité de commande des équipements. La typologie du réseau est en outre figée et ne peut pas évoluer indépendamment de l'opérateur, ce qui n'est pas réaliste pour des réseaux énergétiques décentralisés, lorsqu'une multitude d'acteurs peuvent installer des ressources d'énergie locales pour leur autoconsommation par exemple, ou plus généralement en cas de remplacement ou d'investissement dans les équipements au cours du temps.

### Solution apportée par l'invention

Afin de remédier à ces inconvénients, l'invention concerne selon son acception la plus générale un système pour le contrôle d'une pluralité d'équipements énergétiques Eᵢ répartis en une pluralité de noeuds Nⱼ de consommation, de stockage et/ou de production d'énergie, présentant les caractéristiques énoncés par la revendication 1. Les modes de réalisation préférés sont définis dans les revendications dépendantes. L'invention est exposée dans l'ensemble de revendications annexé.

### Description détaillée d'un exemple non limitatif de l'invention

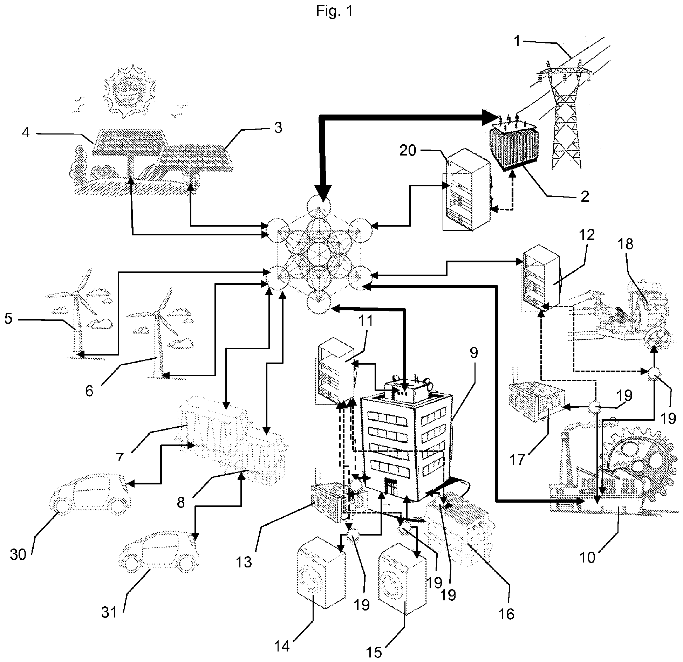

La présente invention sera mieux comprise à la lecture de la description détaillée d'un exemple non limitatif de l'invention qui suit, se référant aux dessins annexés où la figure 1 représente une vue schématique d'un réseau intelligent selon l'invention.

### Description générale du réseau énergétique intelligent

Le réseau énergétique intelligent illustré de manière schématique en figure 1 est constitué par des équipements de production, de stockage et de consommation locaux, répartis sur différents sites. Ce réseau énergétique intelligent peut être relié à un réseau d'électricité et/ou à un réseau de gaz (1) via un poste de livraison (2) pouvant être relié à d'un gestionnaire tiers.

Les sites comportent par exemple :
- des bâtiments d'habitation (3)
- des bâtiments de bureau (4)
- des usines (5)
- des zones techniques d'approvisionnement, de transformation, de production ou de stockage d'énergie.

Chaque site est constitué d'équipements liés à son activité, par exemple une installation de climatisation (13, 17), une installation de chauffage électrique (16), des machines à laver (14, 15), un circuit d'eau chaude sanitaire au sein du bâtiment (9) ou une machine électrique de puissance (18).

Chaque site consomme ainsi de l'énergie pour son fonctionnement, et peut aussi disposer d'équipements de production et/ou de stockage locaux.

Les équipements locaux de production comportent par exemple :
- des panneaux photovoltaïques (3, 4)
- des éoliennes (5, 6)
- des générateurs ou co-générateurs (18)

Les équipements locaux de stockage comportent par exemple des batteries (7, 8) installées dans les bâtiments ou mises à disposition par des véhicules électriques (30, 31).

Ces différents équipements disposent de matériels de comptage, permettant d'acquérir les paramètres énergétiques Pₜ sur le réseau intelligent. Les flux énergétiques de chaque site peuvent notamment être représentés graphiquement sous forme d'un synoptique de mesure et numériquement sous forme d'un graphe des flux énergétiques ou sous forme de formules de comptage f_{comptage}.

Par exemple, on mesure sur un site, par exemple toutes les minutes :
(i) le besoin total d'approvisionnement Eₐₚₚᵣₒ, grâce à un compteur tarifaire, exprimé par exemple en kWh
(ii) l'énergie consommée E_{cons} par chaque zone Z du site et/ou par chaque usage énergétique U grâce à des sous-compteurs, qu'il est possible de représenter comme un graphe orienté
   a. Dans le cas particulier ou l'ensemble des zones et des usages permet de représenter exactement la consommation des équipements du site, on obtient E_{cons} = somme (E_{UZ})
   b. Sinon il est possible d'estimer la consommation résiduelle non mesurée, par différence entre deux mesures ou par calcul théorique selon les caractéristiques de l'équipement ou par comparaison avec un équipement similaire faisant l'objet d'une mesure
(iii) l'énergie produite E_{prod} sur le site
(iv) l'énergie stockée E_{stock} sur le site

Le besoin d'approvisionnement du site s'exprime ainsi sous la forme Eₐₚₚᵣₒ = E_{cons -} E_{prod -} E_{stock +} Pertes. Dans le cas où Eₐₚₚᵣₒ = 0, le site est en autoconsommation sur la période donnée. La formule de comptage permet généralement de calculer la valeur f_{comptage} = E_{appro -} Pertes (les pertes étant donc estimées). Il est en outre possible d'introduire des intervalles de confiance sur chaque donnée mesurée, de manière à calculer la précision associée à f_{comptage}.

Par ailleurs, des matériels de mesure complémentaires (par exemple nombre de pièces produites par l'usine) ou des données externes (par exemple prévisions météorologiques) permettent d'expliquer les paramètres énergétiques ou d'estimer des consommations d'énergie.

Chaque site (9, 10) est équipé d'un calculateur (11, 12) commandant le fonctionnement des équipements de consommation, de stockage et de production associés, selon les paramètres renseignés par les utilisateurs ou par commande externe.

Chacun de ces équipements est pilotable automatiquement par un signal de commande produit par le calculateur (11, 12) associé au site (9, 10) où sont installés les équipements correspondants (13 à 18) associé chacun à un moyen de commande (19), par exemple une prise ou vanne télécommandable.

Les moyens de transmission des données entre les mesures réalisées sur les équipements et le calculateur (11,12) au niveau d'un site peuvent faire appel, selon la fréquence nécessaire, à des moyens de relève manuel ou préférentiellement à des réseaux de télécommunication (par exemple, un réseau filaire ou un réseau radio). De même, un site peut communiquer avec les autres sites et avec l'opérateur, mais n'envoie que les informations strictement nécessaires à l'optimisation et au pilotage global, de manière à assurer la confidentialité des données de chaque équipement.

Enfin, le système comporte un opérateur (20) responsable du fonctionnement global du réseau intelligent, et optionnellement des interconnections avec des acteurs extérieurs (réseau national principal, réseau d'un autre pays, fournisseurs d'énergie, ...).

### Méthode d'optimisation conjointe

Le but de l'invention est d'optimiser au niveau de chaque site (9, 10) ainsi qu'au niveau du réseau intelligent les flux énergétiques en fonction de critères paramétrables :
a) au niveau de l'opérateur, pour prendre en compte une réduction des fluctuations des charges et une minimalisation des coûts, ainsi que les contraintes de permanence de service à l'échelle de l'ensemble du réseau intelligent et vis-à-vis du réseau principal
b) au niveau de chaque site (confort, prix, équipements locaux prioritaires, flexibilité,...) ainsi que les contraintes propres à chaque site (9, 10), telles que l'agenda des fonctions prioritaires, la température minimale et maximale, limites opérationnelles des équipements, etc.

L'objectif de l'opérateur, qu'il soit public ou privé, est de pouvoir gérer le réseau intelligent en assurant sa viabilité financière, dans les limites des contraintes locales et globales, et notamment en fonction des coûts marginaux de production et des prix d'achat et de vente sur les marchés de l'énergie, qui peuvent fluctuer dans le temps de manière significative.

Au niveau de chaque site, l'objectif est d'améliorer le confort et la simplicité d'utilisation tout en réduisant le coût de l'énergie. Cet objectif peut par exemple être réalisé pour les particuliers en déterminant les horaires d'exploitation optimum de leurs équipements ménagers, le chargement des véhicules électriques et installations locales de production renouvelables tels des panneaux photovoltaïques installé sur le toit de l'habitation. Pour les sites industriels, l'objectif est de réduire le coût de l'énergie et d'améliorer leur performance énergétique, dans la conformité de leur processus de fabrication, soumis à diverses contraintes spécifiques à chaque procédé et/ou utilité.

Selon le type d'équipement, un profil de fonctionnement peut être imposé à l'équipement. Par exemple, une charge interruptible q_{EiInterruptible} peut être exprimée sur chaque plage de temps ΔT (sous réserve d'un temps de démarrage et/ou d'arrêt négligeable par rapport à ΔT) en tout ou rien (q_{EiInterruptible} = 0 ou q_{EiInterruptible} = q_{EiMax}) ; d'autres équipements, tels que le niveau de charge (SOC) d'un stockage ou le fonctionnement d'une éolienne selon les régimes de vent, peuvent faire l'objet de modélisations avancées de systèmes cyber-physiques. De tels modélisations sont par exemple décrites dans l'article Hongwen, Xiong Rui, Zhang Xiaowei, Sun Fengchun, and Fan JinXin, "State-of-Charge Estimation of the Lithium-Ion Battery Using an Adaptive Extended Kalman Filter Based on an Improved Thevenin Model," Vehicular Technology, IEEE Transactions on, vol. 60, pp. 1461-1469, 2011.

Un profil peut être dépendant de la mesure de facteurs d'influence, par exemple la demande de chauffage et donc la consommation énergétique associée (hors demande d'ajustement par l'opérateur) peut être représentée sous forme d'une fonction, dont les variables sont par exemple la température intérieure (par exemple obtenu à partir de la température extérieure et d'un modèle thermique) et la présence de personnes (par exemple obtenu par un détecteur de présence).

Un profil peut être dépendant d'états de fonctionnement de l'équipement représentant les modes de contrôle des équipements et qui intègrent les délais de réaction et les contraintes physiques ; par exemple pour une batterie peut être modélisée par une machine d'états, avec des statuts de charge, de décharge et d'arrêt (état inactif) ; pour un panneau photovoltaïque, les modes de contrôle peuvent par exemple être PWM (« Pulse Width Modulation »), MPPT (« Maximum Power Point Tracking »), contraint (le stockage est plein) ou arrêt (état inactif).

Ces profils correspondent alors à des contraintes supplémentaires dans l'optimisation.

Les objectifs sont interdépendants, et le système est conçu pour commander les équipements pilotables de la manière la plus pertinente pour répondre au mieux et de manière conjointe aux objectifs susvisés.

Ce but est atteint par :
- le calcul périodique, par exemple quotidien, des consignes de fonctionnement, par exemple horaire ou quart-horaire, de chaque équipement de chaque site
- la mesure des écarts entre la consommation effective de chaque équipement et la consigne qui lui est associée
- optionnellement, l'actualisation des deux points précédents à des moments intermédiaires en cas de variation significative de certains paramètres.

Le mécanisme d'équilibrage du réseau intelligent mis en œuvre est basé sur une codécision entre :
(i) des approches d'optimisation locale au niveau d'un site ou d'un groupement d'équipements, indépendants les uns des autres, appelé nœud, prenant en compte ses contraintes et objectifs spécifiques ; chaque nœud (exemple : bâtiment) pouvant être lui-même découpé hiérarchiquement en sous-nœuds (exemple : zones du bâtiment, par exemple un atelier et des bureaux), de manière à représenter le graphe des flux énergétiques correspondant aux installations du site ;
   et
(ii) la gestion de l'énergie pour l'ensemble du réseau intelligent et en intégrant les objectifs potentiellement conflictuels de chacun des noeuds.

La codécision entre les acteurs (l'opérateur et les noeuds) correspond à un modèle mathématique d'optimisation sous contraintes issu de la théorie des jeux (modèles d'équilibre non coopératifs) caractéristique du fonctionnement d'un oligopole, dans lequel les acteurs décident à la fois du prix et de la quantité d'énergie. Il est ainsi possible de déterminer une valeur d'équilibre (équilibre de Nash, car les stratégies des acteurs sont optimales compte tenu de leurs actions réciproques), dont la résolution dépend du modèle choisi généralement parmi :
- le modèle d'équilibre de Cournot : les acteurs sont en concurrence sur les quantités produites (et non sur les prix) et décident de ces quantités indépendamment les uns des autres. Chaque acteur qui compose le marché produit un bien homogène (ce qui s'applique au cas énergétique, exprimé par exemple en kWh).
- le modèle d'équilibre de Bertrand : les acteurs annoncent des prix, plutôt que des quantités.
- ou une variante des précédents

L'exactitude des prévisions de chaque modèle varie d'un contexte de réseau intelligent à l'autre, en fonction de la proximité de chaque modèle avec le contexte. Si les quantités peuvent être facilement modifiées (par exemple avec du stockage d'énergie), le modèle d'équilibre de Bertrand ou une variante (par exemple, le modèle de Bertrand-Edgeworth, qui permet d'annoncer le prix et la quantité maximale servie, avec des règles de rationnement pour déterminer qui sera servi) est généralement un meilleur modèle de compétition. Si les quantités sont difficiles à ajuster (par exemple en raison d'une production intermittente), le modèle d'équilibre de Cournot ou une variante est généralement le meilleur. Dans certaines conditions (par exemple, modèle de Kreps Scheinkman), le modèle de Cournot peut être reformulé en tant que modèle en deux étapes, où, dans la première étape, les acteurs choisissent les quantités et, dans la seconde, ils participent à l'équilibre de Bertrand.

Ces différentes stratégies sont symétriques, l'ensemble des acteurs ayant la même importance. Cela est justifié notamment dans le cas où l'opérateur est un acteur sans but lucratif, par exemple dans le cas d'un consortium d'acteurs industriels sur un réseau fermé ou d'une municipalité pour la gestion d'un micro-réseau urbain visant l'autoconsommation : l'opérateur municipalité, dont la mission première est l'urbanisme plus que la gestion énergétique, peut être considéré du point de vue du pilotage énergétique comme un noeud standard, avec la gestion de ses propres bâtiments et actifs de production et stockage, au même titre que les habitants. L'ensemble des noeuds a donc le même poids, avec un pilotage distribué sur l'ensemble des noeuds de manière équivalente, et l'opérateur tient ici un rôle neutre.

Une variante des modèles de Cournot et de Bertrand correspond au modèle d'équilibre de Stackelberg, dans lequel le fonctionnement est asymétrique, c'est à dire lorsque l'opérateur tient un rôle pilote (teneur de marché, gestionnaire de réseau, agrégateur, fournisseur de service énergétique ...) pour l'ensemble du réseau intelligent. L'opérateur doit alors tenir compte du comportement des autres acteurs satellites en intégrant leurs préférences à la propre fonction de profit. Si tous les acteurs se croient satellite (par exemple, une multitude de petits sites qui opèrent chacun en autoconsommation) ou si tous les acteurs se croient pilote (par exemple, dans le cas d'un opérateur principal et d'un consommateur majoritaire tel un électro-intensif ou gazo-intensif par rapport au reste du réseau), cela débouche sur des équilibres instables (la quantité globale étant respectivement beaucoup plus basse et beaucoup plus importante que celle évaluée par chaque acteur).

Le choix du modèle (Cournot, Bertrand ou Stackelberg) est donc choisi au préalable selon le contexte du réseau énergétique intelligent. Etant donné le rôle de pilotage le souvent associé à l'opérateur, notamment dans le cas d'un réseau intelligent ouvert dans lequel il sert de point de connexion avec le réseau principal et des marchés de l'énergie, le modèle de Stackelberg sera le plus fréquemment choisi, tout en vérifiant que les hypothèses s'appliquent et permettent d'aboutir à un équilibre.

La mise en oeuvre du modèle fait appel aux éléments suivants :
(i) Définition des variables et contraintes globales
   a. L'horizon de planification T et le pas de temps ΔT pour l'optimisation. Toutes les autres variables sont échantillonnées sur le pas de temps ΔT (le cas échéant par interpolation ou extrapolation à partir des données acquises)
   b. L'unité physique à utiliser pour le pilotage du réseau intelligent (par exemple kWh). Toutes valeurs seront converties dans cette unité si besoin.
   c. La table de correspondance TC représentant la typologie du réseau
      1. Identifiant unique du nœud principal
      2. Identifiant unique de l'équipement
      3. Statut de l'équipement (critique, actif, non actif)
      4. Type d'équipement : consommation fixe (l'équipement consomme toujours la même quantité d'énergie), consommation flexible (dont on peut modifier la quantité utilisée, à la hausse ou à la baisse), consommation interruptible (pouvant être différée dans le temps), stockage, production intermittente (dépendante notamment des conditions météorologiques), production déterministe (dépendante d'une alimentation en combustible)
      5. Niveau de confiance de l'équipement (fiable, suspect, banni)
   d. La fourchette de prix (valeur minimum et maximum) autorisée à l'achat et à la vente, ainsi que la référence de la place de marché fournissant le prix de gros (prix de base et prix de pointe)
   e. Les algorithmes d'optimisation numérique retenus pour l'opérateur et pour les noeuds, choisi parmi des méthodes d'optimisation locale (par exemple méthode du simplexe), des méthodes d'optimisation globale telles que les méta heuristiques (par exemple un algorithme génétique, recherche tabou, recuit simulé, essaim de particules ...) ou une méthode hybride (par exemple algorithme génétique associé à une recherche locale d'optimum), avec leurs paramètres spécifiques (exemple : probabilité de mutation pour un algorithme génétique, ainsi que la fonction d'évaluation de la population).
   f. La fonction objectif F_{global} de l'opérateur, afin de trouver l'optimum par la méthode numérique précédemment définie. Les critères retenus au niveau de l'opérateur peuvent être tout ou partie des objectifs suivants :
      1. Maximisation de la flexibilité f_{Flex} (par exemple en limitant le nombre d'écarts hors d'un ratio autorisé entre la fluctuation de charge entre la quantité maximale d'énergie et la quantité moyenne d'énergie)
      2. Maximisation de ses profits f_{Profit} (pour un opérateur privé) ou minimisation des pénalités pour l'ensemble du réseau intelligent (pour un opérateur public)
      3. Maximisation de l'impact environnemental f_{Environnement}, par exemple la pénétration des renouvelables (par exemple le ratio entre les volumes d'énergie produits par une source renouvelable et l'ensemble des volumes de production) et/ou de production neutre en gaz à effet de serre, afin de diffuser les technologies ayant un impact positif sur l'environnement
   g. Cette optimisation multicritère est réalisée sous contrainte de l'équilibrage global sur le réseau intelligent
      1. Ces contraintes dépendent des conditions opérationnelles sur les noeuds (planning de consommation, de production d'énergie, de production industrielle, etc...) et du fonctionnement de chaque équipement
      2. Des contraintes opérationnelles, notamment liés aux opérations de maintenance du réseau intelligent, doivent être pris en compte selon les informations contenues dans la table de correspondance. La typologie du réseau intelligent peut en outre évoluer au cours du temps.
      3. Le cas échéant les contraintes additionnelles fournies par le gestionnaire du réseau principal sont intégrées, notamment le profil de consommation global à respecter pour la journée à venir et la flexibilité autorisée (en pourcentage à la hausse et à la baisse)
(ii) Définition des variables et contraintes au niveau de chaque nœud (ou sous-nœud)
   a. La formule de comptage associée au nœud, selon la hiérarchie de comptage depuis le nœud principal (avec une vérification de l'absence de double comptage en cas de découpage du noeud principal en sous-noeuds par zone et/ou usage, par exemple par comparaison avec le compteur tarifaire sur une période historique)
   b. Les caractéristiques associées au noeud
      i. Par exemple pour un bâtiment tertiaire, découpé en zones (bureaux, ateliers, ...) et/ou en usages (éclairage, climatisation, ...), on indique pour chaque zone :
         1. Son positionnement géographique
         2. La surface ou le volume
         3. La capacité d'accueil (nombre maximum de personnes)
         4. Un modèle thermique qui permet de comprendre la relation entre la température intérieure et la température extérieure
         5. Des contraintes additionnelles, définies par le gestionnaire du bâtiment ou de l'habitation, liées à la température minimum Cₘᵢₙ et Cₘₐₓ de consigne, de manière à assurer le meilleur confort thermique
   c. Les quantités d'énergie (fixe ou flexible) des équipements pour chaque zone et usage, avec les plages horaires de fonctionnement souhaitées (renseignés par l'utilisateur final via une interface homme/machine), par exemple:
      1. La plage horaire autorisée pour faire tourner automatiquement la machine à laver (charge flexible), et sa puissance nominale ; dans le cas où l'utilisateur ne souhaite pas faire tourner sa machine, la plage horaire est vide
      2. La plage horaire autorisée pour le chauffage et la puissance maximale du chauffage électrique (charge interruptible)
      3. La plage horaire autorisée et la puissance maximale de l'équipement de climatisation (charge interruptible)
      4. La plage horaire utile et la puissance pour l'éclairage (charge flexible, sauf en cas de personnes présentes et de luminosité trop faible)
      5. La plage horaire utile et la puissance pour l'ascenseur (charge interruptible, sauf en cas de personnes présentes)
      6. La plage horaire utile et la puissance pour les ordinateurs (charge fixe pendant les horaires de travail)
      7. La plage horaire utile pour la disponibilité d'eau chaude sanitaire et la quantité maximale de calories (charge flexible définie par le débit maximal et la température actuelle sur le réseau d'eau)
      8. Etc... (selon les équipements, éventuellement associés à un profil de fonctionnement)
   d. Pour les équipements critiques, des contraintes d'acquittement de certaines tâches peuvent être définies et un profil de délestage depuis la puissance nominale jusqu'à la puissance minimale (éventuellement nulle)
   e. Les caractéristiques du stockage
      1. Par exemple pour une batterie fixe, la puissance maximale de charge et la puissance minimale de décharge, le temps de charge et de décharge, le nombre de cycle et la fonction de coût *µ*ₛ (qui correspond à un amortissement de l'équipement, du fait de l'usure notamment cas de mauvaise utilisation)
      2. Pour le cas particulier des véhicules électriques, la puissance maximale et minimale de charge dépend de l'estimation du nombre de véhicules sur la prochaine période ; le temps de charge peut dépendre de l'usager (par exemple, temps de mise à disposition sur un parking et distance minimale à parcourir)
   f. Les caractéristiques de la production intermittente. Par exemple pour le photovoltaïque, la surface du panneau photovoltaïque, la radiation solaire et l'efficacité de conversion en énergie électrique, la fonction de coût *µ*ᵢ de la source de production renouvelable (souvent, pour simplifier, son coût marginal d'utilisation *µ*ᵢ est considéré comme nul, si on exclut les coûts d'installation et de mise en œuvre).
   g. Les caractéristiques de la production déterministe. Par exemple pour un générateur, les puissances minimales et maximales, le temps minimum de lancement et d'arrêt, la fonction de coût *µ*_{g} du générateur (généralement une fonction d'utilité quadratique dont les paramètres dépendent du combustible)
   h. La liste des prévisions météorologiques en lien avec le modèle thermique du bâtiment et/ou la production d'énergie renouvelable (notamment la température extérieure, la radiation solaire, le sens et la direction du vent)
   i. La fonction objectif F_{local} du noeud, qui peut prendre tout ou partie des objectifs suivants :
      1. Minimisation de l'inconfort f_{Inconfort} : défini par exemple en fonction des périodes (en minutes) d'inconfort thermique ou de l'écart (en degrés Kelvin) par rapport à une température cible, par exemple en cas d'interruption de la climatisation ; minimisation des arrêts de l'éclairage si des personnes sont présentes ; etc.
      2. Minimisation des pertes énergétiques f_{Pertes} (par exemple la sous performance par rapport au ratio de consommation cible par personne ou de consommation par mètre carré)
      3. Minimisation des coûts f_{Cout} (dépendant des prix d'achat et de vente définis à l'échelle globale)
   j. Cette optimisation est réalisée sous contrainte, par exemple :
      1. Les échéances des tâches critiques
      2. Les quantités maximales d'énergie pour chaque équipement et/ou pour l'installation complète
      3. Les températures minimum et maximum de consigne
      4. Le nombre de personnes à accueillir
      5. Les temps et quantités de charge et de décharge des stockages
      6. Les temps de démarrage et d'arrêt des générateurs
      7. Les contraintes spécifiques au site, par exemple un planning de production pour un site industriel avec des cadences minimales à respecter

La décision au niveau de chaque noeud dépend de la décision au niveau de l'opérateur, et réciproquement, selon la procédure min/max suivante :
(i) Initialisation des paramètres pour la séquence d'optimisation
   a. Pour simplifier le raisonnement sans perte de généralité, on considère ici une optimisation pour la journée suivante J, au pas horaire.
   b. Le prix initial est défini à partir d'une modélisation issue
      i. de la cotation acheteur/vendeur observée sur le marché de gros (par exemple EEX) par tranche horaire, sur les jours précédents. Un exemple simple est de prendre les prix de la veille J-1. Alternativement des modélisations stochastiques plus complexes permettent de mieux anticiper les pics et la saisonnalité des prix.
      ii. optionnellement des informations publiées par le réseau principal sur son planning de fonctionnement, ainsi que les prévisions météorologiques, permettent de mieux anticiper les conditions du jour J (les prix étant définis par ordre de mérite des coûts marginaux des centrales disponibles)
      iii. des coûts de fourniture, de transport, de capacité et de taxes, selon les règlementations en vigueur.
   c. La planification de charge initiale correspond à la dernière planification horaire publiée en date J-1, ajustée des nominations horaires réalisées le cas échéant avec le réseau principal pour le jour J
(ii) Optimisation globale sur les prix
   1. Fonction d'évaluation de l'optimum : F_{global} = α. f_{Flex} + P- f_{Profit} + avec f_{Environnement} avec f_{Flex} l'objectif de flexibilité sur les appels de charge par rapport au nominal, f_{Profit} l'objectif de rentabilité et f_{Environnement} l'impact environnemental
   2. Les contraintes : f_{Flex} est borné supérieurement par la flexibilité maximale autorisée par l'opérateur ou éventuellement par la flexibilité f_{Max} négociée avec le réseau principal, en prenant une marge opérationnelle m pour éviter les pénalités, par exemple f_{Flex} < f_{Max -} m ; f_{Profit} est borné inférieurement (par exemple f_{Profit} > 0)
   3. Le problème à résoudre numériquement : trouver le maximum de F_{global} sous les contraintes exprimées ci-dessus
   4. Le résultat intermédiaire : la matrice des prix pₜ = [bidₜ | askₜ]
(iii) Publication des résultats à l'ensemble des nœuds Nⱼ, qui intègrent les conditions de prix et de consommation comme une contrainte
(iv) Optimisation locale au niveau de chaque nœud Nⱼ pour définir leur planification de charge
   a. L'optimisation est réalisée de manière hiérarchique pour chaque sous-noeud (en partant du noeud le plus bas et en remontant récursivement jusqu'au noeud principal) qui détermine les quantités horaires pour chaque équipement, en fonction des variables et contraintes spécifiques au sous-noeud et des prix fournis à l'étape précédente
      i. La valeur initiale de la quantité horaire est définie par équipement par exemple à partir des valeurs de J-1 et agrégée par la formule de comptage associée au sous-noeud
         1. Fonction d'évaluation de l'optimum : F_{local} = α. f_{Inconfort} + β. f_{Pertes} + f_{Cout} avec f_{Confort} une fonction du confort des utilisateurs, f_{Pertes} une fonction de la performance énergétique locale et f_{Cout} le coût d'énergie local (dépendant de la matrice de prix pₜ et des actifs locaux de génération *µ*_{g} et de stockage *µ*ₛ)
         2. Les contraintes : les contraintes dépendent des caractéristiques des sites et des équipements.
            a. Pour les équipements de consommation électrique par exemple, on considère les contraintes physiques des réseaux de distribution, à la fois au niveau individuel (exemple : puissance maximale du climatiseur, puissance maximale du four, etc...) et de l'installation complète q_{Noeud} < q_{Max} (exemple : au sein d'une habitation, la puissance maximale, constituée par la puissance instantanée de chaque équipement, est limitée pour éviter les surtensions).
            b. Toute autre contrainte sur les quantités ou les horaires spécifique au noeud ou aux équipements (telles que celles explicitées précédemment)
         3. Le problème à résoudre numériquement : trouver le minimum de F_{local} sous les contraintes exprimées ci-dessus
         4. Le résultat intermédiaire : la quantité q_{k,t} pour chaque équipement au pas horaire
   b. Le noeud principal (exemple : bâtiment) met à jour et sauvegarde dans sa mémoire interne chacun des résultats q_{k,t}. Il agrège ces quantités selon la formule de comptage q_{j,t} = f_{comptage}(q_{k,t}), de manière à fournir le résultat de planification de charge du nœud Nⱼ
(v) Publication des résultat de l'optimisation locale L_{j,t} = q_{j,t} à l'opérateur O par les nœuds Nⱼ
(vi) Sommation des résultats L_{j,t} pour obtenir la planification des charges qₜ = somme(q_{j,t}) sur l'ensemble des noeuds indépendants Nⱼ et application de la fonction d'évaluation (« fitness test » en anglais) par l'opérateur O.
(vii) Si le test est concluant, l'opérateur publie la planification de charge et les prix associés sous forme du résultat global Gₜ = [pₜ; qₜ] et garde Gₜ en mémoire pour la phase de pilotage ; sinon, on boucle sur l'étape (ii) en modifiant les paramètres de l'optimisation (par exemple par mutation dans le cas d'un algorithme génétique).
(viii) Détermination par le nœud Nⱼ de la planification pour chaque équipement Eₖ dans son périmètre : C_{k,t} = [pₜ; q_{k,t}] grâce au résultat q_{k,t} précédemment sauvegardé dans sa mémoire interne.

La sortie du modèle donne donc une planification optimale en quantité et en prix pour la période de temps T à venir (dans l'exemple : la journée), sur le pas de temps ΔT (dans l'exemple : horaire), pour chaque équipement. Cette planification sert de commande aux équipements sur la période T, avec des actions d'ajustement de chaque équipement à chaque ΔT pour respecter cette planification prévisionnelle.

### Méthode de pilotage

A chaque pas de temps ΔT, les paramètres énergétiques réels P_{k,t} sont mesurés sur les équipements Eₖ et envoyés au noeud Nⱼ correspondant. Le noeud Nⱼ dispose de moyens automatiques de correction des données de mesure transmises par les équipements Eₖ, en cas de valeur erronée ou manquante (par exemple, remplacement par la valeur de la veille, par le résultat d'une régression sur les valeurs historiques ou une modélisation stochastique etc...).

L'écart absolu entre P_{k,t} et q_{k,t} permet de calculer un réponse binaire, envoyé à l'opérateur O et permettant de savoir si le programme est respecté par l'équipement Eₖ (avec une marge relative epsilon):
(i) B_{k,t} = vrai si abs(P_{k,t} - q_{k,t})/q_{k,t} < epsilon
(ii) B_{k,t} = faux dans le cas contraire (ce signal pouvant être envoyé en cours de période, dès que l'écart dépasse le seuil epsilon)

L'écart relatif D_{k,t} = abs(P_{k,t} - q_{k,t})/q_{k,t} est donc calculé pour chaque équipement Eₖ. Le noeud Nⱼ est donc capable de calculer une liste de statistiques S_{j,t} sur les écarts observés sur l'ensemble des équipements dont il a la responsabilité, par exemple :
- la moyenne d_{j,t} des écarts individuels D_{k,t} pondérée par leur poids énergétique P_{k,t}
- les moments statistiques des écarts
- la valeur minimale des écarts
- la valeur maximale des écarts
- le taux de défaillance d'équipements incapables de répondre à la commande C_{k,t}
- les pourcentages sur la flexibilité à la hausse ou à la baisse par rapport à la planification q_{k,t}, par exemple le pourcentage correspondant aux consommations des équipements interruptibles
- le pourcentage de production d'origine intermittente
- le pourcentage de capacité offerte par le stockage
- etc...
ainsi que leur évolution dans le temps (sur la période T, sur plusieurs périodes successives T₀, T₁, ..., T_{N}), de manière à pouvoir alerter sur des dégradations graduelles du respect de la commande (par exemple un nombre croissant et de plus en plus rapproché d'événements B_{k,t}), détecter des déséquilibres réguliers (par exemple un pic de consommation dû à un afflux de véhicules électriques sur une même zone et au même moment, à l'heure d'arriver au travail, provocant des appels de charge trop importants) ou à expliquer des déséquilibres ponctuels (par exemple, une maintenance non planifiée ou un équipement défaillant).

Ces statistiques peuvent aussi être mises en regard des facteurs d'influence mesurés par ailleurs, pour compléter l'explication de l'écart. Par exemple, un écart peut être dû à une affluence imprévue, que l'on peut expliquer si l'on dispose d'une mesure du nombre de personnes présentes. Ces statistiques peuvent aussi faire l'objet d'un apprentissage, afin de déterminer automatiquement les classes d'installation les plus performantes et de construire des référentiels permettant la comparaison entre les sites, selon leurs caractéristiques. In fine, les utilisateurs peuvent utiliser ces données à des fins de conception des systèmes énergétiques.

Ces statistiques du noeud Nⱼ sont publiées tous les ΔT à l'opérateur O et optionnellement à tout ou partie des autres noeuds. L'opérateur peut ainsi calculer un écart global sur l'ensemble des nœuds, et prendre des mesures correctives si l'écart effectif est trop important par rapport à la flexibilité autorisée. Le cas échéant, un signal de commande U_{j,t} (ou éventuellement A_{j,t}) est envoyé au noeud Nⱼ dont l'écart est le plus important par rapport à la prévision ou qui contient le plus grand nombre d'équipements avec B_{k,t} = faux. Si ce noeud répond qu'il met en place une commande corrective, il transmet une consigne corrective aux équipements Eₖ interruptibles (pour une demande d'ajustement à la baisse) ou flexibles qui a priorité sur la planification initiale. Si ce noeud ne répond pas ou répond qu'il est incapable d'agir, la commande corrective est envoyée au deuxième noeud le plus en écart, et ainsi de suite jusqu'à ce que la quantité souhaitée soit atteinte. Optionnellement, un système de pénalité financière peut être mis en place par l'opérateur pour inciter les noeuds à répondre positivement et à déclencher des commandes correctives sur les équipements dont ils ont la responsabilité.

Le nœud Nⱼ peut en outre stocker une évolution du niveau de confiance (si l'écart est trop important, de manière répétée) et/ou du statut (actif -> inactif par exemple, en cas de défaillance) de chaque équipement Eₖ dont il a la responsabilité. A l'inverse, un équipement Eₖ ou un opérateur humain peuvent demander au nœud Nⱼ une mise à jour de ces informations (par exemple, remise à l'état actif après une maintenance). Selon les niveaux d'habilitation, le nœud Nⱼ est libre ou non d'accepter (par exemple, un opérateur humain a généralement autorité sur les décisions automatiques).

Le pilotage consiste à transformer en entrée de chaque équipement la commande C_{k,t} envoyée par le nœud Nⱼ en signal numérique ou analogique compréhensible par l'équipement, par exemple :
- sur un site résidentiel ou tertiaire, le noeud Nⱼ agit le plus souvent directement sur les charges énergétiques grâce à des prises ou vannes intelligentes, par exemple avec des protocoles d'internet des objets
- sur un site industriel, le noeud Nⱼ agit en automate programmable avec des signaux au format compris par les machines (par exemple selon une trame modbus)
- le noeud Nⱼ peut aussi envoyer des commandes aux sources de production ou aux stockages, dans un format pouvant être compris par ladite machine (par exemple, un message envoyé à un onduleur pour gérer une demande d'ilotage d'un générateur photovoltaïque ; un ordre de démarrage d'un générateur ; etc...)

Dans une variante l'opérateur O dispose de moyens de communication avec des équipements tiers (poste de transformation, système d'information du gestionnaire du réseau principal et/ou des fournisseurs d'énergie, etc.). En comparant le besoin qₜ avec l'énergie contractualisée à l'interconnexion avec le réseau principal et fournie par des tiers, l'opérateur O peut par exemple envoyer une mise à jour du programme de nomination des besoins prévisionnels du lendemain au point de livraison. A l'inverse, l'opérateur O peut participer à des réponses à des programmes d'ajustement ou de capacité mis en oeuvre par le réseau principal, en relançant la planification. Par exemple pour une offre « effacement » (ajustement à la baisse) de la part du réseau principal :
(i) Si la quantité d'énergie à « effacer » (par exemple la demande d'une réduction de x% de la courbe de charge qₜ) est atteignable d'après les statistiques de planification initiale (disponible via les pourcentages de flexibilité, pondérées par les quantités prévues en nominal, le mécanisme de co-décision est rejoué, selon la variante suivante :
   a. Les prix alternatifs p_{alt,t} peuvent être établis soit en intégrant simplement la prime d'effacement proposée par le réseau principal, soit (dans l'objectif pour l'opérateur O de maximiser son profit par rapport à la prime du gestionnaire de réseau) par un mécanisme d'enchères entre les noeuds définis en fonction des coûts marginaux internes (si l'ajustement n'est pas possible uniquement par réduction des charges interruptibles et/ou flexibles non critiques, le noeud fait appel à la production au coût *µ*_{g} et/ou au soutirage au coût *µ*ₛ selon un ordre croissant des équipements actifs, et intègre les prévisions minimales sur la production renouvelable en fonction des données météorologiques)
   b. Les quantités alternatives q_{alt,j,t} sont déterminées par le mécanisme d'optimisation local (résolution de la fonction objectif F_{local}) sur base des prix alternatifs p_{alt,t}, et avec une contrainte supplémentaire sur la quantité alternative maximale (par exemple q_{altMax,j,t} < (1-x)q_{Max,j,t}) et en intégrant la contrainte sur les délais de mise en oeuvre par les équipements (par exemple, un temps de réaction inférieur à 30 minutes est demandé contractuellement par le gestionnaire du réseau principal, ce qui exclut les actifs ayant un temps d'activation trop long)
(ii) Les noeuds Nⱼ renvoient leur planification de la courbe de charge alternative q_{alt,t}
(iii) Si la quantité qₜ totale est bien ajustée à la baisse conformément à la demande du réseau principal, éventuellement avec une marge opérationnelle décidée par l'opérateur O (liée notamment au pourcentage de sources de production intermittente), la confirmation de l'offre d'effacement est envoyée au gestionnaire du réseau principal et aux nœuds Nⱼ qui sauvegardent chacun cette planification alternative G_{alt,t} = [p_{alt,t}; q_{alt,t}] (et en déduisent la commande alternative de chaque équipement C_{alt,k,t})
(iv) Avant réception d'un éventuel ordre d'effacement par le réseau principal, les noeuds Nⱼ fonctionnent selon la planification initiale Gₜ; selon les possibilités offertes par le mécanisme d'effacement, l'opérateur peut aussi notifier le réseau principal en cas de problème, par exemple si le taux de défaillance d'équipements est trop important, de manière à annuler l'offre d'effacement
(v) En cas de réception de l'ordre d'effacement par le réseau principal, l'opérateur O envoie un signal aux noeuds Nⱼ pour mettre à jour le pilotage conformément à la planification alternative G_{alt,t}
(vi) Enfin des statistiques spécifiques au respect des ordres d'effacement (en durée et en quantité) peuvent être générées par chacun des nœuds

En mode pilotage, des critères supplémentaires de contrôle temps réel peuvent être mise en oeuvre pour la protection des équipements, tels l'écrêtage par exemple, afin de modifier une commande C_{k,t} en fonction des mesures locales.

Les informations mesurées ou calculées permettent aussi de mettre à jour certains des paramètres de pilotage, par exemple :
- Le vieillissement des équipements peut être pris en compte par une mise à jour des valeurs telles que les informations relatives au cycle de charge et de décharge d'une batterie par exemple
- Une modélisation complémentaire des variables exogènes, telles que les prix des marchés de l'énergie : il est ainsi possible de mettre à jour les fourchettes des prix minimum et maximum.
- Les périodes de maintenance (statut actif/inactif) peuvent aussi être définies en fonction de la performance énergétique et/ou opérationnelle effective des équipements, grâce à la prise de décision humaine suite à une alerte A_{j,t}
- Calcul d'une marge technique intégrant les pannes et le non-respect de la planification (notion de pied de pilote), grâce aux statistiques produites par les noeuds et/ou l'opérateur
- Etc.

Il est aussi possible d'estimer la pertinence des prévisions utilisées (par exemple, un indice de confiance sur les prévisions météorologiques) et plus généralement la pertinence du modèle d'optimisation locale utilisé. Cette pertinence doit être mise au regard de la qualité des données mesurées (sensibilité et précision).

### Gestion de la confidentialité

Tout ou partie des informations échangées entre l'opérateur et les noeuds, entre les noeuds, ainsi qu'entre un noeud et les équipements dont il a la responsabilité peuvent être chiffrées.

La gestion de la confidentialité des données sur les réseaux énergétiques est une problématique importante, car la connaissance de la courbe de charge permet d'expliquer en grande partie les usages et les comportements des utilisateurs. A ce titre, la courbe de charge est souvent considérée comme une donnée personnelle, notamment dans les cas résidentiels. Dans les cas d'entreprises ou d'administrations, les règlementations peuvent demander à chaque interlocuteur de bien identifier quelles données tierces sont utilisées. La solution exposée permet de n'échanger que les informations indispensables au pilotage tel que décrit dans l'invention, et ne nécessite pas l'envoi à des acteurs extérieurs au noeud d'informations personnelles.

Dans certaines configurations plus spécifiques, il peut toutefois être utile pour un pilotage plus précis et rapide de permettre la communication d'informations complémentaires facilitant l'observabilité sur le réseau intelligent, par exemple l'envoi de signaux de commande et/ou d'alarme directement de l'opérateur aux équipements, ou la mise à disposition des courbes de charge individuelles des équipements. Cela est notamment possible lorsque l'opérateur et les noeuds appartiennent au même acteur (par exemple, un nano-réseau de type campus universitaire pour gérer les équipements de l'université) ou que la confidentialité des données est assurée contractuellement (par exemple, un consortium industriel).

L'optimisation et le pilotage permettent aux gestionnaires des équipements d'utiliser leurs propres contraintes locales, sans jamais les communiquer à l'opérateur. Les résultats des équipements sont agrégés à la maille du noeud, l'opérateur ne dispose donc pas des informations individuelles sur les courbes de charge. La structure hiérarchique des noeuds et sous-noeuds, avec la formule de comptage associée, permet d'inclure l'ensemble des équipements de consommation, de production et de stockage d'un site, ce qui rend difficile l'analyse de décomposition de la courbe de charge en signaux d'équipements individuels (technologies connues sous l'acronyme NIALM ou « Non Intrusive Appliance Load Monitoring »). Par ailleurs, à aucun moment l'opérateur ne dispose d'informations relatives à l'usage énergétique des équipements.

Les données éventuellement partagées par un nœud Nⱼ avec les autres noeuds correspondent à des données agrégées à l'ensemble du noeud Nⱼ (les statistiques S_{j,t}) et portent sur les écarts par rapport à la planification (donc une valeur relative, à partir de laquelle on ne peut déduire la valeur absolue sans connaissance de la consigne C_{j,t} connue uniquement de l'opérateur O et du nœud Nⱼ). Les autres nœuds ne disposent jamais de la courbe de charge planifiée ou réelle du noeud Nⱼ mais seulement de la courbe de charge planifiée qₜ pour l'ensemble du réseau intelligent.

Dans le cadre de l'échange des statistiques S_{j,t} les noeuds et l'opérateur O agissent en réseau pair à pair. Néanmoins il est possible que l'information envoyée par un noeud soit erronée, de manière volontaire ou non. Par exemple, un noeud Nⱼ peut indiquer qu'un équipement Eₖ est actif, alors que celui-ci ne fonctionne pas pour réduire ses coûts énergétiques par exemple. Dans ce cas l'opérateur O observera a posteriori une courbe de charge qₜ réelle différente de celle prévue mais ne pourra identifier directement le noeud qui a menti. Par conséquent, il est nécessaire d'évaluer conjointement si les valeurs retournées par les noeuds Nⱼ sont plausibles.

Pour chacun de noeuds dans le réseau énergétique intelligent, et chacune des valeurs distribuées S_{j,t} dont on veut tester la plausibilité:
- Phase d'initialisation
   o Un paramètre correspond au quorum de vérifications à atteindre pour chaque itération (dépend de la taille du réseau)
   o Un paramètre correspond à la règle de majorité à appliquer pour considérer un noeud non plausible (par exemple une majorité simple des vérifications par le qorum indique le résultat non plausible)
   o Une période historique H sur laquelle appliquer les vérifications (par exemple le dernier mois, la dernière année, etc.)
   o Pour un nouveau nœud dans le réseau intelligent, celui-ci ne disposant pas d'historique suffisant, son statut de plausibilité est initialisé à un état indéterminé ; dans ce cas particulier la période historique H peut être plus courte (par exemple la semaine)
- Chaque nœud Nⱼ vérifie les données d'un sous-ensemble des autres noeuds:
   ∘ détermine ses v vérifications à effectuer
      ▪ par un algorithme des plus proches voisins, grâce à un algorithme d'apprentissage sur les données publiées par l'ensemble des noeuds (par à une méthode de classification, supervisée ou non, sur l'ensemble de l'espace des statistiques publiées par l'ensemble des nœuds pendant la période H)
      ▪ et/ou de manière aléatoire parmi les nœuds n'ayant pas atteint un quorum de vérifications (l'ensemble des nœuds devant in fine avoir été évalué)
   o pour chacune de ces vérifications v il calcule en t une fourchette d'évolution plausible de la valeur S_{v,t} sur la prochaine période ΔT à partir des données historiques H envoyées au réseau par le noeud Nᵥ (par exemple via une régression ou une chaine de Markov MCMC), optionnellement complétées par des paramètres internes du nœud Nⱼ (si j et v sont plus proches voisins)
   o détermine en t+ΔT si la valeur S_{v,t+ΔT} est effectivement dans la fourchette plausible, sous forme d'un résultat de plausibilité intermédiaire pouvant prendre 3 valeurs: plausible, non plausible, indéterminé si l'historique n'est pas suffisant
- Le consensus global sur le résultat de plausibilité du noeud Nₘ peut être réalisé
   o soit de manière centralisée avec l'envoi des résultats de vérification à l'opérateur O par les autres noeuds, vérifie le quorum, traite les résultats par la règle de majorité et publie un résultat agrégé de plausibilité à l'ensemble des nœuds
   o soit par un protocole de consensus distribué entre l'ensemble des noeuds (par exemple algorithme dit des généraux byzantins) afin de ne pas dépendre d'un point central et pouvoir calculer automatiquement cet état de confiance si une majorité des noeuds est honnête
- In fine au niveau de l'opérateur O, des tests de corrélation et de Co intégration sur la période H entre les écarts globaux et le résultat de plausibilité du noeud Nₘ permet de mettre à jour le niveau de confiance (fiable : corrélation non significative / suspect : corrélation significative mais test de Co intégration négatif / banni : test de Co intégration positif).

Optionnellement tout ou partie des statistiques S_{j,t} ou d'indicateurs en dérivant peuvent être transmises au gestionnaire du réseau principal ou à des acteurs tiers de manière à faciliter l'observabilité des phénomènes sur les réseaux secondaires, ainsi que l'optimisation et le pilotage du réseau principal.

## Revendications

1. - Système pour le contrôle d'une pluralité d'équipements énergétiques Eᵢ (13 à 18) répartis en une pluralité de nœuds Nⱼ de consommation (9, 10), de stockage (7, 8) et/ou production d'énergie (3 à 6), lesdits nœuds constituant un sous-réseau énergétique fonctionnant de manière isolée ou rattachés à au moins un réseau d'électricité et/ou à un réseau de gaz (1) via un poste de livraison (2), une partie au moins des équipements Eₖ (13 à 18) desdits de noeuds Nⱼ de consommation (9, 10) comportant un moyen de pilotage (19) du fonctionnement en fonction d'un signal de commande transmis par son noeud Nⱼ
o un moyen de mesure de paramètres énergétiques P_{k,t}
• chacun desdits noeuds Nⱼ comportant :
∘ des moyens d'acquisition de données comprenant
▪ des moyens de communication avec un opérateur (20)
▪ des moyens de communication avec lesdits moyens de pilotage des équipements locaux Eₖ
▪ des moyens de communication avec au moins un capteur fournissant des informations locales
▪ des moyens de communication avec au moins une source d'informations extérieures comme par exemple la météo, des données administratives ou une tarification
▪ des moyens de communication avec au moins une interface-utilisateur comme par exemple la saisie de paramètres ou de conditions de démarrage ledit réseau étant **caractérisé en ce que** :
o une partie au moins des équipements Eₖ (13 à 18) comporte un moyen de mesure de paramètres énergétiques P_{k,t}
∘ chacun desdits noeuds Nⱼ comporte des moyens de traitement numérique configurés pour calculer localement une donnée d'optimisation locale L_{j,k} en fonction des données acquises d'une part et des données relatives à des contraintes transmises par l'opérateur (20) et optionnellement par le réseau principal
• ledit opérateur (20) comportant
∘ des moyens de traitement numérique configurés pour calculer localement une donnée d'optimisation globale en fonction des données d'optimisation locale transmises par lesdits nœuds Nⱼ et pour transmettre à chacun desdits nœuds Nⱼ le résultat du traitement Gₜ, pour constituer la planification de fonctionnement pendant une période prédéterminée
• chacun desdits équipements Eₖ (13 à 18) étant configuré pour être piloté pendant ladite période en fonction d'une commande C_{k,t} calculée et transmise par le noeud Nⱼ en fonction du résultat global Gₜ.
• ledit pilotage consistant à transformer en entrée de chaque équipement Eₖ (13 à 18) la commande C_{k,t} envoyée par le nœud Nⱼ en signal numérique ou analogique compréhensible par l'équipement.

2. - Système pour le contrôle d'une pluralité d'équipements énergétiques Eᵢ selon la revendication précédente **caractérisé en ce que** :
• chacun desdits nœuds Nⱼ comporte une mémoire pour l'enregistrement périodique d'une partie ou de la totalité desdits commandes C_{k,t}
• lesdits moyens de calcul de chacun desdits noeuds Nⱼ étant configurés pour déterminer les écarts entre les paramètres énergétiques fournis par lesdits équipements Eₖ par rapport auxdites commandes C_{k,t} sous la forme d'une réponse binaire B_{k,t} transmise à l'opérateur.

3. - Système pour le contrôle d'une pluralité d'équipements électriques Eₖ selon la revendication précédente **caractérisée en ce que** ledit opérateur comporte des moyens configurés pour comparer :
• la somme algébrique des consommations, des volumes stockés et des productions locales mesurées P_{k,t}
et
• la somme algébrique des consommations, des volumes stockés et des productions locales de consigne C_{k,t}
exprimées ou converties dans une même unité physique et pour déterminer les variations D_{k,t} entre l'énergie réelle et l'énergie planifiée. En cas d'écart trop important par rapport à la planification initiale, une commande de correction est déclenchée au niveau de tout ou partie des équipements Eₖ.

4. - Système pour le contrôle d'une pluralité d'équipements énergétiques Eₖ selon la revendication 1 **caractérisé en ce que** l'opérateur comporte en outre des moyens configurés pour échanger des informations avec un équipement de contrôle du réseau principal.

## Patentansprüche

1. System für die Steuerung einer Vielzahl von Energieanlagen Eᵢ (13 bis 18), die auf eine Vielzahl von Verbrauchs- (9, 10), Speicher- (7, 8) und/oder Energieerzeugungsknoten Nⱼ (3 bis 6) verteilt sind, wobei die Knoten ein Energieteilnetz bilden, das isoliert arbeitet oder über eine Lieferstation (2) an mindestens ein Stromnetz und/oder ein Gasnetz (1) angeschlossen ist, wobei mindestens ein Teil der Anlagen Eₖ (13 bis 18) von den Verbrauchsknoten Nⱼ (9, 10) umfasst: ein Mittel (19) zur Regelung des Betriebs in Abhängigkeit von einem Steuersignal, das durch seinen Knoten Nⱼ übertragen wird,
∘ ein Mittel zum Messen von Energieparametern P_{k,t}
• jeder der Knoten Nⱼ umfassend:
∘ Datenerfassungsmittel, umfassend
▪ Mittel zur Kommunikation mit einem Betreiber (20)
▪ Mittel zur Kommunikation mit den Mitteln zur Regelung lokaler Anlagen Eₖ
▪ Mittel zur Kommunikation mit mindestens einem Sensor, der lokale Informationen bereitstellt
▪ Mittel zur Kommunikation mit mindestens einer Quelle externer Informationen, wie zum Beispiel dem Wetterbericht, Verwaltungsdaten oder einer Tarifierung
▪ Mittel zur Kommunikation mit mindestens einer Benutzerschnittstelle, wie zum Beispiel dem Eingeben von Parametern oder Startbedingungen
wobei das Netz **dadurch gekennzeichnet ist, dass**:
∘ mindestens ein Teil der Anlagen Eₖ (13 bis 18) ein Mittel zur Messung der Energieparameter P_{k,t} umfasst
∘ jeder der Knoten Nⱼ Mittel zur digitalen Verarbeitung umfasst, die konfiguriert sind, um lokale Optimierungsdaten L_{j,k} in Abhängigkeit von den erfassten Daten einerseits und den Daten in Bezug auf Einschränkungen, die durch den Betreiber (20) und optional durch das Hauptnetz übermittelt werden, lokal zu berechnen
• der Betreiber (20) umfassend
∘ Mittel zur digitalen Verarbeitung, die konfiguriert sind, um globale Optimierungsdaten in Abhängigkeit von lokalen Optimierungsdaten, die durch die Knoten Nⱼ übertragen werden, lokal zu berechnen und um das Ergebnis der Verarbeitung Gₜ an jeden der Knoten Nⱼ zu übertragen, um die Betriebsplanung während eines vorbestimmten Zeitraums zu erstellen
• wobei jede der Anlagen Eₖ (13 bis 18) konfiguriert ist, um während des Zeitraums in Abhängigkeit von einem Befehl C_{k,t} geregelt zu werden, der durch den Knoten Nⱼ in Abhängigkeit von dem globalen Ergebnis Gₜ berechnet und übertragen wird.
• wobei die Regelung darin besteht, bei Einführung jeder Anlage Eₖ (13 bis 18) den durch den Knoten Nⱼ gesendeten Befehl C_{k,t} in ein für die Anlage verständliches digitales oder analoges Signal umzuwandeln.

2. System für die Steuerung einer Vielzahl von Energieanlagen Eᵢ nach dem vorstehenden Anspruch, **dadurch gekennzeichnet, dass:**
• jeder der Knoten Nⱼ einen Speicher für die periodische Aufzeichnung eines Teils oder der Gesamtheit der Befehle C_{k,t} umfasst
• wobei die Mittel zur Berechnung jedes der Knoten Nⱼ konfiguriert sind, um die Differenzen zwischen den Energieparametern, die durch die Anlagen Eₖ bereitgestellt werden, in Bezug auf die Befehle C_{k,t} in Form einer an den Betreiber übermittelten binären Antwort B_{k,t} zu bestimmen.

3. System für die Steuerung einer Vielzahl von elektrischen Anlagen Eₖ nach dem vorstehenden Anspruch, **dadurch gekennzeichnet, dass** der Betreiber Mittel umfasst, die zum Vergleichen konfiguriert sind von:
• der algebraischen Summe aus Verbrauch, gespeicherten Volumina und gemessener lokaler Produktion P_{k,t}
und
• der algebraischen Summe aus Verbrauch, gespeicherten Volumina und lokaler Sollproduktion C_{k,t},
die in einer gleichen physikalischen Einheit ausgedrückt oder in diese umgewandelt werden und um die Abweichungen D_{k,t} zwischen der tatsächlichen Energie und der geplanten Energie zu bestimmen. Bei einer zu großen Differenz relativ zu der ursprünglichen Planung wird ein Korrekturbefehl in Bezug auf die sämtlichen oder einen Teil der Anlagen Eₖ ausgelöst.

4. System für die Steuerung einer Vielzahl von Energieanlagen Eₖ nach Anspruch 1, **dadurch gekennzeichnet, dass** der Betreiber ferner Mittel umfasst, die konfiguriert sind, um Informationen mit einer Steueranlage des Hauptnetzes auszutauschen.

## Claims

1. System for monitoring a plurality of items of power equipment Eᵢ (13 to 18) distributed in a plurality of consumption (9, 10), storage (7, 8) and/or power production (3 to 6) nodes Nⱼ, said nodes constituting a power sub-network operating in isolation or connected to at least one electricity and/or gas network (1) via a delivery station (2), at least some of the items of equipment Eₖ (13 to 18) of said consumption (9, 10) nodes Nⱼ comprising a means (19) for controlling operation according to a command signal transmitted by their node Nⱼ
∘ a means for measuring power parameters P_{k,t}
• each of said nodes Nⱼ comprising:
data acquisition means comprising
▪ means for communicating with an operator (20)
▪ means for communicating with said means for controlling the local items of equipment Eₖ
▪ means for communicating with at least one sensor providing local information
▪ means for communicating with at least one source of external information, such as, for example, the weather, administrative data or a pricing system
▪ means for communicating with at least one user interface, such as, for example, inputting parameters or start-up conditions
said network being **characterized in that:**
o at least some of the items of equipment Eₖ (13 to 18) comprise a means for measuring power parameters P_{k,t}
o each of said nodes Nⱼ comprises digital processing means which are configured to locally calculate a piece of local optimization data L_{j,k} according to the acquired data and the data relating to constraints transmitted by the operator (20) and, optionally, by the main network
• said operator (20) comprising
∘ digital processing means which are configured to locally calculate a piece of overall optimization data according to the local optimization data transmitted by said nodes Nⱼ and to transmit the result of the processing Gtto each of said nodes Nⱼ, to constitute the operation planning for a predetermined period of time
• each item of said equipment Eₖ (13 to 18) being configured to be controlled during said period of time according to a command C_{k,t} which is calculated and transmitted by the node Nⱼ according to the overall result Gₜ.
• said control consisting in transforming, at the input of each item of equipment Eₖ (13 to 18), the command C_{k,t} sent by node Nⱼ into a digital or analog signal that can be understood by the equipment.

2. System for monitoring a plurality of items of power equipment Eᵢ according to the preceding claim, **characterized in that:**
• each of said nodes Nⱼ comprises a memory for periodically storing some or all of said commands C_{k,t}
• said calculating means of each of said nodes Nⱼ being configured to determine the differences between the power parameters supplied by the items of equipment Eₖ relative to said commands C_{k,t} in the form of a binary response B_{k,t} which is transmitted to the operator.

3. System for monitoring a plurality of items of electrical equipment Eₖ according to the preceding claim, **characterized in that** the operator comprises means which are configured to compare:
• the algebraic sum of consumption, stored volumes and measured local production P_{k,t}
and
• the algebraic sum of consumption, storage volumes and the setpoint local production C_{k,t}
expressed or converted in the same physical unit, and to determine the variations D_{k,t} between the actual and planned power. If the difference is too great in relation to the initial planning, a correction command is initiated for all or some of the items of equipment Eₖ.

4. System for monitoring a plurality of items of power equipment Eₖ according to claim 1, **characterized in that** the operator further comprises means which are configured to exchange information with an item of control equipment of the main network.
